# EUROPEAN PATENT SPECIFICATION

(11) **EP 1 610 217 B1**
(45) Date of publication and mention of the grant of the patent: **01.05.2013**
(21) Application number: 05011247.3
(22) Date of filing: 24.05.2005
(51) Int. Cl.: G09G 5/00, G03B 21/14

(54) **Image display system**
Bildanzeigesystem
Système d'affichage d'image

(30) Priority: 24.06.2004 JP 2004186466
(43) Date of publication of application: 28.12.2005
(73) Proprietor: NEC Display Solutions, Ltd., Minato-ku Tokyo (JP)
(72) Inventor: Fukuda, Kazuya, Minato-ku, Tokyo 108-0014 (JP)
(74) Representative: Vossius & Partner

(56) References cited:
- EP-A- 1 376 519
- US-A1- 2002 149 577
- US-B1- 6 320 576
- US-B1- 6 552 738
- US-B1- 6 683 585

## Description

The present invention relates to an image display system comprising an image output apparatus and an image display apparatus.

Heretofore, image display projectors such as overhead projectors (OHPs) have primarily been used in applications for projecting the image of an object placed on a stage onto a screen. A wide-spread practice in recent time is to connect an image display projector to a personal computer serving as an image output apparatus and to project image information generated by the personal computer onto a screen.

For displaying an image generated by an image output apparatus such as a personal computer on a projection surface via an image display apparatus such as a projector, it is necessary that the image output apparatus and the image display apparatus be connected to each other by an image signal cable. Furthermore, for the image output apparatus to control the image display apparatus, a control cable must connect the image output apparatus and the image display apparatus to each other.

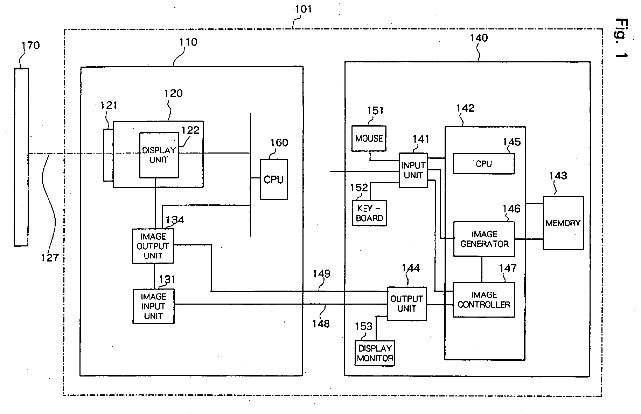

Fig. 1 of the accompanying drawings shows in block form a conventional image display system. As shown in Fig. 1, conventional image display system 101 comprises projector 110 and personal computer 140. Projector 110 comprises projection device 120 having projection lens 121 and display unit 122, image output unit 134 for outputting an image to display unit 122, image input unit 131, and central processing unit 160 for controlling overall operation of projector 110.

Projector 110 operates as follows: Image input unit 131 receives image information that has been output from image controller 147 of personal computer 140 through output unit 144 and image signal cable 148, and image output unit 134 outputs an output image to display unit 122, which projects the output image through projection lens 121 onto projection surface 170. At this time, image output unit 134 receives information for controls images control from image controller 147 of personal computer 140 through output unit 144 and control cable 149, and controls brightness levels, for example, of images to be projected.

JP-A- 2004-86277 discloses an image processing apparatus wherein a personal computer and a projector are connected to each other by a single USB (universal serial bus) cable. When a particular area in a displayed image is specified or when one of a plurality of windows in a displayed image is specified, the personal computer processes image data in the specified area or window, generates image data compatible with the specifications of a display device of the projector, and sends the generated image data to the projector, which displays an image based on the transmitted image data.

According to the former conventional image display system, at least two cables, i.e., the image signal cable and the control cable, need to be connected between the personal computer and the projector for enabling the personal computer to control the projector. It is tedious and time-consuming to connect the personal computer and the projector using the two cables. According to the image processing apparatus disclosed in

JP-A- 2004-86277, the personal computer and the projector are connected to each other by the single USB cable. However, the projector has no CPU (central processing unit) therein, and the personal computer serving as an image output apparatus reads the status of the projector, and controls the projector, depending on the status of the projector, through bidirectional communications. Therefore, the projector itself does not control the display device thereof.

US-B1-66 83 585 discloses a picture display control system similar to the preamble of claim 1. US-B1-6552 738 discloses a user interface for controlling a display device similar to US-B1-6683585.

It is an object of the present invention to provide an image display system which is capable of controlling images to be displayed by an image display apparatus through a single image signal cable connected to a personal computer. This object is achieved with the features of the claims.

According to the present invention, the control information for controlling the projected image is combined with the image information to be output to the image display apparatus, as part of the image information, and is output to the image display apparatus. The image display apparatus reads the control information for controlling the projected image from the image information output from the image output apparatus, distinguishes the read control information, and controls the projected image to be output according to the determined control information. The image display apparatus can be controlled from the image output apparatus through a single image control cable that interconnects the image output apparatus and the image display apparatus.

The above and other objects, features, and advantages of the present invention will become apparent from the following description with reference to the accompanying drawings which illustrate examples of preferred embodiments of the present invention.
Fig. 1 is a block diagram of a conventional image display system;
Fig. 2 is a block diagram of an image display system according to a first embodiment of the present invention;
Fig. 3A is a view of an image that is displayed by the image display system according to the first embodiment when application software is executed, showing a first state of the displayed image;
Fig. 3B is a view of the image that is displayed by the image display system according to the first embodiment when the application software is executed, showing a second state of the displayed image;
Fig. 4A is a view of an image that is displayed by an image display system according to a comparative example when application software is executed, showing a first state of the displayed image; and
Fig. 4B is a view of the image that is displayed by the image display system according to the comparative example when the application software is executed, showing a second state of the displayed image.

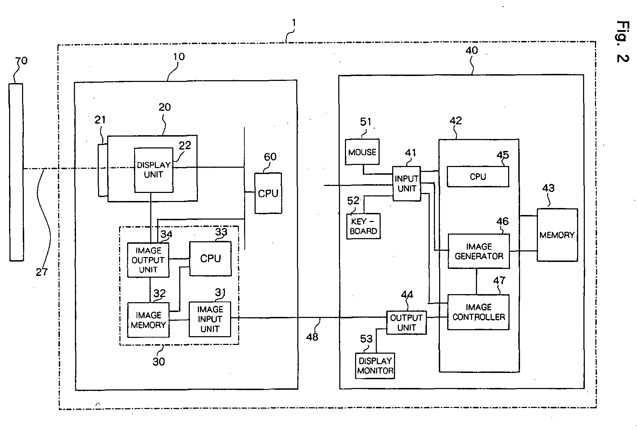

As shown in Fig. 2, image display system 1 according to a first embodiment of the present invention comprises projector 10 serving as an image display apparatus and personal computer 40 serving as an image output apparatus. Projector 10 comprises projection device 20 having projection lens 21 and display unit 22, image adjustment device 30 for outputting an image to display unit 22, and central processing unit 60 for controlling overall operation of projector 10. Image adjustment device 30 comprises image input unit 31 for image input unit 31 that is supplied with image information from image controller 47 of personal computer 40, image memory 32 for storing supplied image information, CPU (microprocessor) 33 for monitoring image memory 32 to control an image that is to be output, and image output unit 34 for outputting an image that is controlled to display unit 22. In projection device 20, display unit 22 projects an image that is output from image output unit 34 through projection lens 21 onto projection surface 70.

Personal computer 40 comprises input unit 41, data processor 42, memory 43, output unit 44, mouse 51 and keyboard 52 that are connected to input unit 41 for entering information, and display monitor 53 connected to output unit 44 for displaying on its screen output information including an image to be output to projector 10. Data processor 42 comprises central processing unit 45 for controlling the overall operation of data processor 42, image generator 46 for generating an image to be input from an input signal from input unit 41 and from data stored in memory 43, and image controller 47 for controlling the image generated by image generator 46 and outputting the controlled image. The image output from image controller 47 is transmitted as output image information from output unit 44 through image signal cable 48 to image input unit 31 of projector 10. Projector 10 and personal computer 40 are connected to each other only by image signal cable 48.

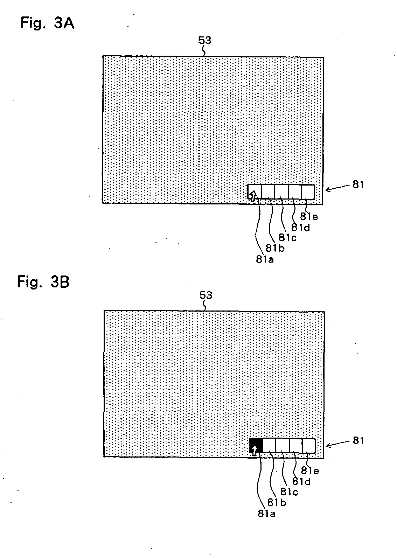

Operation of the image display system according to the first embodiment of the present invention will be described below with reference to Figs. 3A and 3B. An image output from personal computer 40 is transmitted through image signal cable 48 to projector 10. The output image transmitted to projector 10 is input to image input unit 31 and stored as image data in image memory 32. Thereafter, CPU 33 reads control information that is combined with image information from the stored image data, and image output unit 34 controls the image information that corresponds to the control information. The controlled image information is transferred from image output unit 34 to display unit 22, which projects an image based on the controlled image information through projection lens 21 onto projection surface 70.

Items to be controlled with respect to images displayed by projector 10 include, for example, the brightness and hues of the images, and, if images to be displayed are accompanied by sounds, the sound level, and the projected position of the images. These items usually need to be controlled by personal computer 40. Heretofore, control cable 149 shown in Fig. 1 has been necessary in addition to image signal cable 48 between projector 10 and personal computer 40 for controlling those items. According to the present invention, images to be displayed are controlled using only image signal cable 48 that interconnects projector 10 and personal computer 40.

Control information, which is combined with the image information that is transmitted through image signal cable 48 is transmitted from personal computer 40 through image signal cable 48 to projector 10. Different brightness levels that are presented in a given area of an image that is represented by the image information, represent the control information that is combined with the image information. CPU 33 reads the different brightness levels from the image data stored in image memory 32 of projector 10, and image output unit 34 controls the image information depending on the read different brightness levels. Then, display unit 22 projects an image based on the controlled image information onto projection surface 70. The area of the displayed image where the control information is presented is positioned at a corner of the image, and poses no practical problem when projected onto projection surface 70.

A process for increasing and decreasing the brightness level of a projected image will be described below. Control application software is installed in advance in personal computer 40. As shown in Figs. 3A and 3B, the control application software is executed when a predetermined input signal is entered from mouse 51 or keyboard 52 of personal computer 40. Display monitor 53 of personal computer 40 displays an image including button array 81 in a lower right position as shown in Fig. 3A. Button array 81 includes five buttons 81a, 81b, 81c, 81d, 81e for controlling five elements, i.e., for example, brightness level, hue, sound level, trapezoidal distortion correction, and control menu, in the present embodiment. Button 81 a on the rightmost end of the button array is used as, but not limited to, a brightness level adjustment button. Mouse 51, for example, is used to move and click a cursor on one of the buttons in button array 81 for entering a command. Various different ways of inputting commands may be used. According to the present embodiment, there are provided as many buttons in button array 81 as the number of elements to be controlled, and when the cursor positioned on one of the buttons in button array 81 is clicked successively, the button changes cyclically through seven color levels ranging from white to black. Specifically, when the cursor positioned on brightness level adjustment button 81 a is clicked successively by mouse 81, brightness level adjustment button 81 a changes cyclically through seven color levels ranging from a white level shown in Fig. 3A to a black level shown in Fig. 3B.

When brightness level adjustment button 81 a is displayed in the white level, an image shown in Fig. 3A is transmitted to projector 10. The image is stored in image memory 32 via image input unit 31. At this time, CPU 33 monitors the image data of the area of image memory 32 where buttons in button array 81 are stored. If CPU 33 judges that the image data of brightness level adjustment button 81 a is of the white level, then CPU 33 instructs image output unit 34 to display the image at the brightest level. When brightness level adjustment button 81 a is displayed in the black level, an image shown in Fig. 3B is transmitted to projector 10. The image is stored in image memory 32 via image input unit 31. At this time, CPU 33 monitors the image data of the area of image memory 32 where buttons in button range 81 are is stored. If CPU 33 judges that the image data of brightness level adjustment button 81 a is of the black level, then CPU 33 instructs image output unit 34 to display the image at the darkest level. When brightness level adjustment button 81a is displayed in an intermediate color level, CPU 33 adjusts the brightness of the image depending on the intermediate color level of brightness level adjustment button 81a. Hue, sound level, trapezoidal distortion correction, and control menu are similarly adjusted to preset values depending on the color levels of corresponding buttons 81 b, 81 c, 81 d, 81 e.

For controlling projector 10 by means of the control menu thereof, control menu button 81 e changes through six color levels. Specifically, when button 81 e is displayed in the white level, the image shown in Fig. 3A is transmitted to projector 10. At this time, control menu of projector 10 is not displayed. When button 81e is displayed in the black level, the control menu of projector 10 is displayed. When button 81e is in the first color, the cursor on the control menu is moved upwardly. When button 81 e is in the second color, the cursor on the control menu is moved downwardly. When button 81e is in the third color, the cursor on the control menu is moved leftwardly. When button 81e is in the fourth color, the cursor on the control menu is moved rightwardly.

When button 81 e is changed to the black level in order to display the control menu, CPU 33 monitors the image data of the area of image memory 32 where buttons in button array 81 are stored. If CPU 33 judges that button 81e is of the black level, then CPU 33 instructs image output unit 34 to display the control menu and the cursor.

If CPU 33 judges that button 81 e is of the second color, then CPU 33 instructs image output unit 34 to move the cursor downwardly. If CPU 33 judges that button 81 e is of the third color, then CPU 33 instructs image output unit 34 to move the cursor leftwardly. In this manner, the control menu of projector 10 is controlled.

Consequently, simply by controlling display monitor 53 of personal computer 40 with mouse 51 and keyboard 52, control information is transmitted in combination with image information transmitted through image signal cable 48 to projector 10 for controlling the displayed image. Although the displayed image is controlled based on the brightness level of buttons in button array 81 in the present embodiment, the displayed image may be controlled based on the buttons in button array 81 that control shape, size, and displayed position of the image.

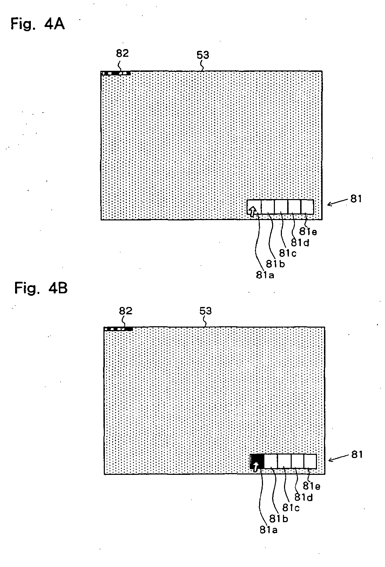

An image display system according to a comparative example, useful for understanding the present invention will be described below with reference to Figs. 4A and 4B. As shown in Figs. 4A and 4B, display monitor 53 of personal computer 40 displays an image including button array 81 in a lower right position as with the first embodiment. According to the comparative example, control commands are input using buttons in button array 81, but personal computer 40 changes pixel array 82 in the upper left position in the image into an array of white and block dots according to predetermined standards, as shown in Figs. 4A and 4B. Button array 81 is deleted from the image transmitted to projector 10, and CPU 33 of projector 10 reads pixel array 82. In Fig. 4A, pixel array 82 in the upper left position in the image is represented by an array of white, black, white, black, black, white, white, and black dots corresponding to the white level of button 81a. In Fig. 4B, pixel array 82 in the upper left position in the image is represented by an array of white, black, white, black, white, white, black, and black dots corresponding to the black level of button 81 a. In this manner, pixel array 82 is displayed as a preset array depending on the color level of one of the buttons selected in button array 81. If the white dot of the pixel array is represented by "1" and the black dot thereof by "0", then the pixel array shown in Fig. 4A or 4B may be represented by binary information such as "10100110" or "10101100".

The image transmitted from personal computer 40 is stored in image memory 32 via image input unit 31. CPU 33 monitors the image data of the area of image memory 32 where the pixels in the upper left portion of the image are stored. If the image data is represented by "10100110", then CPU 33 instructs image output unit 34 to display the image at the brightest level. If the image data is represented by "10101100", then CPU 33 instructs image output unit 34 to display the image at the darkest level. According to the comparative example, since the control information is represented by only pixel array 82 positioned at the end of the image, it has almost no effect on the image projected onto projection surface 70.

According to the present invention, as described above with respect to the illustrated embodiment, a displayed image can be controlled by changing a portion of the image information of the image. The images used as control information in the illustrated embodiment are given by way of example only, and may be any images insofar as they can be recognized by CPU 33 of projector 10. In the embodiment, five buttons in button array 81 are used to control five elements. According to modifications, the buttons may be changed to other colors than white and black, and their colors may be selected and brightness levels thereof may be varied by manipulating mouse 51 and keyboard 52. Alternatively, mouse 51 and keyboard 52 may be used to change the shape, size, and display position of button array 81 which is used for specifying image adjustment levels.

While a preferred embodiment of the present invention has been described using specific terms, such description is for illustrative purposes only, and it is to be understood that changes and variations may be made without departing from the scope of the following claims.

## Claims

1. An image display system (1) comprising:
an image display apparatus(10) for projecting an image onto a projection surface; and
an image output apparatus (40) for generating an image and outputting the image as image information to said image display apparatus,
said image output apparatus (40) comprising:
an image controller (47) adapted to combine control information for controlling the image to be projected, with said image information output to said image display apparatus, as part of said image information, and to output the control information combined with the image information,
said image display apparatus (10) having an image adjustment device (30),
wherein said image adjustment device (30) comprises;
an image memory (32) for storing the image information output from said image output apparatus;
a data determining unit (33) adapted to read and determine said control information for controlling the image to be projected, from the image information stored in said image memory; and
an image output unit (34) adapted to control the image to be projected to be output according to the control information determined by said data determining unit,
**characterized in that**
said image output apparatus (40) further comprises:
a display monitor (53) adapted to display said image, a button (81), said button being displayed in a predetermined position in the image to be projected, said control information for controlling the image to be projected consisting of said button, and said button specifying a feature that is to be controlled in a control range, said feature being controlled by said control information by changing at least one of a shape, a size and a brightness level of the button, and
means (51, 52) adapted to input a command to change said at least one of the shape,
size and brightness level of the button (81).

2. An image display system according to claim 1, wherein said button (81) is comprised in a button array including a plurality of buttons (81a-81e) for specifying a plurality of features to be controlled.

3. An image display system according to claim 1 or 2, wherein said feature to be controlled includes at least one of brightness level, hue, sound level, trapezoidal distortion correction, and control menu of the projected image.

4. An image display system according to claim 1, 2 or 3, wherein said image display apparatus (10) comprises a projector.

5. An image display system according to claim 1, 2, 3 or 4, wherein said image output apparatus (40) comprises a personal computer.

## Patentansprüche

1. Bildanzeigesystem (1), das aufweist:
eine Bildanzeigevorrichtung (10) zur Projektion eines Bildes auf eine Projektionsfläche; und
eine Bildausgabevorrichtung (40) zum Erzeugen eines Bildes und zur Ausgabe des Bildes als Bildinformationen an die Bildanzeigevorrichtung,
wobei die Bildausgabevorrichtung (40) aufweist:
eine Bildsteuerung (47), die so angepasst ist, dass sie Steuerungsinformationen zur Steuerung des zu projizierenden Bildes mit den zur Bildanzeigevorrichtung ausgegebenen Bildinformationen als Teil der Bildinformationen kombiniert und die mit den Bildinformationen kombinierten Steuerungsinformationen ausgibt,
wobei die Bildanzeigevorrichtung (10) eine Bildjustiervorrichtung (30) aufweist,
wobei die Bildjustiervorrichtung (30) aufweist:
einen Bildspeicher (32) zum Speichern der von der Bildausgabevorrichtung ausgegebenen Bildinformationen;
eine Datenermittlungseinheit (33), die so angepasst ist, dass sie die Steuerungsinformationen liest und zur Steuerung des zu projizierenden Bildes aus den im Bildspeicher gespeicherten Bildinformationen bestimmt; und
eine Bildausgabeeinheit (34), die so angepasst ist, dass das auszugebende, zu projizierende Bild entsprechend den durch die Datenermittlungseinheit ermittelten Steuerungsinformationen steuert,
**dadurch gekennzeichnet, dass**
die Bildausgabevorrichtung (40) ferner aufweist:
einen Bildmonitor (53), der so angepasst ist, dass er das Bild anzeigt, wobei das Bild eine Schaltfläche (81) aufweist, die in einer vorgegebenen Position in dem zu projizierenden Bild angezeigt wird, wobei die Steuerungsinformationen zur Steuerung des zu projizierenden Bildes aus der Schaltfläche bestehen und die Schaltfläche ein in einem Steuerbereich zu steuerndes Merkmal spezifiziert, wobei das Merkmal durch die Steuerungsinformationen gesteuert wird, indem mindestens eine der Variablen Form, Größe und Helligkeitspegel der Schaltfläche verändert wird, und
eine Einrichtung (51, 52), die so angepasst ist, dass sie einen Befehl zur Veränderung der mindestens einen Variablen Form, Größe und Helligkeitspegel der Schaltfläche(81) eingibt.

2. Bildanzeigesystem nach Anspruch 1, wobei die Schaltfläche (81) in einer Schaltflächenmatrix enthalten ist, die mehrere Schaltflächen (81a-81e) zur Spezifikation mehrerer zu steuernder Merkmale enthält.

3. Bildanzeigesystem nach Anspruch 1 oder 2, wobei das zu steuernde Merkmal mindestens eine der Variablen Helligkeitspegel, Farbton, Schallpegel, Trapezverzerrungskorrektur und Steuermenu des projizierten Bildes ist.

4. Bildanzeigesystem nach Anspruch 1, 2 oder 3, wobei die Bildanzeigevorrichtung (10) einen Projektor aufweist.

5. Bildanzeigesystem nach Anspruch 1, 2, 3 oder 4, wobei die Bildausgabevorrichtung (40) einen Personalcomputer aufweist.

## Revendications

1. Système d'affichage d'image (1) comprenant :
un appareil d'affichage d'image (10) pour projeter une image sur une surface de projection ; et
un appareil de sortie d'image (40) pour générer une image et sortir l'image comme informations d'image vers ledit appareil d'affichage d'image ;
ledit appareil de sortie d'image (40) comprenant :
un contrôleur d'image (47) adapté pour combiner des informations de contrôle, pour contrôler l'image à projeter, avec lesdites informations d'image sorties vers ledit appareil d'affichage d'image, comme partie desdites informations d'image, et pour sortir les informations de contrôle combinées avec les informations d'image,
ledit appareil d'affichage d'image (10) ayant un dispositif d'ajustement d'image (30),
dans lequel ledit dispositif d'ajustement d'image (30) comprend :
une mémoire d'image (32) pour stocker les informations d'image sorties dudit appareil de sortie d'image ;
une unité de détermination de données (33) adaptée pour lire et déterminer lesdites informations de contrôle, pour contrôler l'image à projeter, à partir des informations d'image stockées dans ladite mémoire d'image ; et
une unité de sortie d'image (34) adaptée pour contrôler l'image à projeter devant être sortie selon les informations de contrôle déterminées par ladite unité de détermination de données,
**caractérisé en ce que**
ledit appareil de sortie d'image (40) comprend en outre :
un moniteur d'affichage (53) adapté pour afficher ladite image, dans lequel ladite ïmage comprend un bouton (81), ledit bouton étant affiché dans une position prédéterminée dans l'image à projeter, lesdites informations de contrôle pour contrôler l'image à projeter étant constituées par ledit bouton, et ledit bouton spécifiant une caractéristique qui doit être contrôlée dans une plage de contrôle, ladite caractéristique étant contrôlée par lesdites informations de contrôle en changeant au moins un parmi une forme, une taille et un niveau de luminosité du bouton, et
des moyens (51, 52) adaptés pour entrer une commande pour changer ledit au moins un parmi la forme, la taille et le niveau de luminosité du bouton (81).

2. Système d'affichage d'image selon la revendication 1, dans lequel ledit bouton (81) est compris dans un groupement de boutons comprenant une pluralité de boutons (81a-81e) pour spécifier une pluralité de caractéristiques à contrôler.

3. Système d'affichage d'image selon la revendication 1 ou 2, dans lequel ladite caractéristique à contrôler comprend au moins un parmi le niveau de luminosité, la teinte, le niveau sonore, la correction de distorsion trapézoïdale et le menu de contrôle de l'image projetée.

4. Système d'affichage d'image selon la revendication 1, 2 ou 3, dans lequel ledit appareil d'affichage d'image (10) comprend un projecteur.

5. Système d'affichage d'image selon la revendication 1, 2, 3 ou 4, dans lequel ledit appareil de sortie d'image (40) comprend un ordinateur personnel.
